# EUROPÄISCHE PATENTANMELDUNG

(11) **EP 0 772 965 A1**
(43) Veröffentlichungstag der Anmeldung: **14.05.1997**
(21) Anmeldenummer: 96117701.1
(22) Anmeldetag: 05.11.1996
(51) Int. Cl.: A01C 23/00

(54) **Gülleverteiler**

(30) Priorität: 09.11.1995 DE 29517792 U; 08.02.1996 DE 29601934 U; 04.06.1996 DE 29609874 U; 07.10.1996 DE 29617277 U
(71) Anmelder: Fliegl, Josef, 84556 Kastl (DE)
(72) Erfinder: Fliegl, Josef, 84556 Kastl (DE)
(74) Vertreter: Seidel, Herta, Dipl.-Phys.

(57) **Zusammenfassung**

Bei einem Gülleverteiler mit einem oder mehreren langgestreckten Verteilerrohren (3a,3b) denen über eine oder mehrere Zuführungsleitungen (4) die in einem fahrbaren Vorratsbehälter (1) befindliche Gülle zugeführt wird und die in ihrer Längsrichtung in Abständen voneinander angeordnete, zur Ackerfläche hingerichtete , Auslauföffnungen (5) aufweisen, ist der Querschnitt der Verteilerrohre (3a,3b) zumindest im Bereich der Auslauföffnungen (5), etwa halbkreisförmig ausgebildet und in dem hierdurch gebildeten gekrümmten Bereich der Verteilerrohre (3a,3b) sind in Längsrichtung der Rohre drehbar gelagerte Fördereinrichtungen (6) vorgesehen, die in Abständen voneinander auf ihrer Achse angeordnete, bis zur Rohrinnenwandung reichende Förderglieder aufweisen, deren freie Enden bei Drehung der Achse entlang der Innenwandung der Verteilerrohre (3a,3b) gleiten.

## Beschreibung

Die Erfindung betrifft einen Gülleverteiler mit einem oder mehreren langgestreckten Verteilerrohren, denen über eine oder mehrere Zuführungsleitungen die in einem fahrbaren Vorratsbehälter befindliche Gülle zugeführt wird und die in ihrer Längsrichtung in Abständen voneinander angeordnete, zur Ackerfläche hingerichtete Auslauföffnungen aufweisen. Ein solcher Gülleverteiler ist bereits aus der DE-PS 4313326 bekannt geworden. Hier handelt es sich um einen sogenannten Schleppschlauch-Flüssigkeitsverteiler, dessen Schläuche an Ablaufrohrstutzen von Verteilergehäusen aufgesteckt sind, die als quer zur Fahrtrichtung des Flüssigkeitsbehälters verschwenkbare langgestreckte Hohlkörper ausgebildet sind.

Die Ablaufstutzen sind entlang der Hohlkörper gleichmäßig beabstandet und können durch in Längsrichtung der Hohlkörper bewegbare Schieber geöffnet und verschlossen werden. Hierzu weist der Hohlkörper einen rechteckigen Querschnitt auf und der Schieber ist als Flachschiene ausgebildet, um durch das Hin- und Herbewegen des Schiebers das Öffnen und Verschließen der Ablaufrohrstutzen zu ermöglichen.

Es hat sich aber gezeigt, daß die den Verteilerrohren zugeführte Gülle sich im wesentlichen am Rohrende staut und kein gleichmäßiger Gülleaustritt aus den längs des Rohres angeordneten Rohrstutzen erfolgt. Dies ist aber von wesentlicher Bedeutung für den Bauern, da er sicher sein will, daß die ganze mit dem Güllefaß überfahrene Ackerfläche gleichmäßig mit Gülle versorgt wird. Außerdem verstopfen sich die Rohrstutzen mit den in der Gülle enthaltenen Feststoffen, da die Hin- und Herbewegung des Schiebers nicht dazu ausreicht, die Ausflußöffnungen von den dort festgesetzten Brocken wieder zu befreien.

Der Erfindung liegt die Aufgabe zugrunde, eine gleichmäßige Gülleverteilung durch die in den Verteilerrohren vorgesehenen Auslauföffnungen zu erreichen und auch zu verhindern, daß die in der Gülle enthaltenen Pestkörper die Auslauföffnungen verstopfen.

Erfindungsgemäß wird dies dadurch erreicht, daß der Querschnitt der Verteilerrohre, zumindest im Bereich der Auslauföffnungen, etwa halbkreisförmig verläuft und in dem hierdurch gebildeten gekrümmten Bereich der Verteilerrohre in Längsrichtung der Rohre verlaufende, drehbar gelagerte Fördereinrichtungen vorgesehen sind, mit in Abständen voneinander auf deren Achse angeordneten, bis zur Rohrinnenwandung reichenden Fördergliedern, deren freie Enden bei Drehung der Achse entlang der Innenwandung der Verteilerrohre gleiten.

Durch die Drehbewegung der Fördereinrichtungen wird die Gülle innerhalb der Verteilerrohre von den Güllezulaufstellen zum Ende der Verteilerrohre hin bewegt. Hierbei läuft die zwischen den einzelnen Fördergliedern befindliche Gülle durch die Auslauföffnungen ab, während die in der Gülle vorhandenen Festkörper infolge der Bewegung der Förderglieder längs der Rohrinnenwand entweder zwischen den Fördergliedern und der diese umgebenden Wandung des Verteilerrohres zerkleinert oder an das Ende der Verteilerrohre befördert werden.

Vorzugsweise sind als Fördereinrichtungen Förderschnecken eingesetzt, deren Außenkanten zur Verbesserung ihrer Zerkleinerungsfunktion angeschliffen sein können.

Vorzugsweise befindet sich an dem vom Güllezulauf abgelegenen Ende der Verteilerrohre ein Stauraum, der von der Bedienungsperson geöffnet werden kann, um die sich dort ansammelnden Festkörperbestandteile zu entfernen.

Gemäß einer weiteren vorzugsweisen Ausbildung der Erfindung ist der Querschnitt der Verteilerrohre so gewählt, daß sich über der Fördereinrichtung ein freier Raum befindet, der zumindest teilweise mit Gülle befüllbar ist. Hierdurch werden zwei für eine gleichmäßige Gülleausbringung wesentliche Vorteile erreicht. Ist durch die Geländeform beim Überfahren des zu bearbeitenden Ackers eine gewisse Schräglage der Verteilerrohre bedingt, so werden auch die Auslauföffnungen, die sich in dem höher gelegenen Ende des Verteilerrohres befinden, durch die sich im freien Raum über der Förderschnecke befindliche Gülle versorgt, da nicht die gesamte Gülleflüssigkeit in den tiefer gelegenen Bereich der Verteilerrohre abfließen kann.

Der freie Raum über der Fördereinrichtung ist aber darüber hinaus für einen automatisch erzielbaren Druckausgleich erforderlich, da die durch die Fördereinrichtung zum Stauraum hin beförderte Güllemenge, die nicht vollständig durch die Auslauföffnungen abgeflossen ist, nun in den freien Raum über der Fördereinrichtung ausweichen kann.

Um ein gleichmäßiges Ausbringen der Gülle in bestimmbarer Menge zu erreichen, sind ,gemäß einer weiteren vorzugsweisen Ausbildung, über der Fördereinrichtung in dem Verteilerrohr parallel übereinander angeordnete, in Richtung der Längsachse der Verteilerrohre relativ zueinander verschiebbare Trennplatten vorgesehen, wobei jede Trennplatte mit der gleichen Anzahl von in Abständen voneinander angeordneten Durchlaßöffnungen versehen ist, die in einer ersten Verschiebestellung (Verschlußstellung) gegeneinander vollständig abdeckbar sind und in einer zweiten Verschiebestellung (Durchlaßstellung für die dem Verteilerrohr zugeführte Gülle) sich zumindest teilweise überdecken.

Eine alternative Lösung kann aber auch dadurch erreicht werden, daß zumindest der untere Bereich des Verteilerrohres doppelwandig ausgebildet ist, beide Wandteile eine übereinstimende Anzahl von Durchlaßöffnungen aufweisen und in Längsrichtung des Verteilerrohres relativ so zueinander verschiebbar sind, daß die Durchlaßöffnungen der Wandteile entweder ganz abgedeckt (Verschlußstellung) sind, oder sich zumindest teilweise überdecken (Durchlaßstellung für die Gülle) . Durch Verstellelemente, die entweder die verschiebbare Trennplatte oder das Wandteil verschieben oder in einer gewünschten Stellung arretieren, läßt sich die auf das Feld auszubringende Güllemenge dosieren.

Um die Geruchsbelästigung beim Ausbringen der Gülle bei Verwendung des erfindungsgemäßen Gülleverteilers zu verhindern, ist es vorteilhaft, daß die Auslauföffnungen mit Schläuchen verbunden sind, deren Länge so gewählt ist, daß ihre Enden beim Ausbringen der Gülle mindestens bis zur Ackerfläche reichen.

Durch die einander benachbarten, auf der Achse der Fördereinrichtung angeordneten Förderglieder werden mit Gülle gefüllte Kammern gebildet und die Gülle fließt aus diesen Kammern in die Ausflußstutzen und läuft dann im freien Fall nach unten weg.

Es hat sich aber nun gezeigt, daß der Güllestrom aus einigen Schläuchen sich während der Arbeitsphase kontinuierlich verstärkt, aber der Gülledurchfluß durch anfänglich weniger gut gefüllte Schläuche kontinuierlich abnimmt. Das heißt mit anderen Worten, man beobachtet einen Effekt, der offenbar auf eine Saugwirkung zurückzuführen ist, die mit dem Einfluß des kontinuierlichen, durch die vollständig gefüllten Schläuche fließenden Güllestromes auf die den benachbarten Schläuchen zugeführte Gülle erklärt werden muß. Diesem von dem zusammenhängenden Güllestrom erzeugten Sog folgt nach dem Prinzip eines Saughebers die im Verteilerrohr befindliche Gülle und fließt kontinuierlich weiter durch den gefüllten Schlauch ab, solange die Verbindung zwischen der durch den Schlauch abfließenden Gülle mit der im Verteilerrohr befindlichen Gülle nicht abreißt. Der Gülleausfluß aus den anderen Schläuchen wird aber allmählich weniger.
Das heißt mit aber mit anderen Worten, die Gülleverteilung wird bei vielen Schleppschläuchen im Laufe der Zeit unregelmäßig.

Um diesem Übelstand abzuhelfen und dafür zu sorgen, daß alle Schläuche kontinuierlich gleichmäßig mit Gülle versorgt und die Gülle auch in gleichmäßiger Verteilung auf das Feld ausgebracht werden kann, werden vorzugsweise in dem Bereich zwischen den Ausflußöffnungen und den mit den Auslaßstutzen verbundenen Enden der Schleppschläuche Luftzutrittsöffnungen vorgesehen.

Da die Gülle unter relativ hohem Druck oder zumindest in freiem Fall aus dem Gülleverteiler durch die Schläuche nach unten strömt, wird durch die Luftzutrittsöffnung infolge des vorhandenen Unterdruckes längs der strömenden Flüssigkeit Luft in den Schlauch eingesaugt. Hierdurch wird ein Abreißen des Güllestromes verursacht, der von dem Flüssigkeitsstrom in den Schläuchen auf die im Güllevorratsbehälter vorhandene Gülle ausgeübte Sog wird unterbrochen. Die in der Gülleverteilereinrichtung vorliegende Güllemenge gelangt in gleichmäßiger Menge in alle Schläuche und von diesen auf den Acker.

Die Anbringung von Luftzutrittsöffnungen im Bereich jedes Auslaufstutzens verhindert somit von vornherein die Ausbildung der vorstehend beschriebenen Saugwirkung. Das heißt, die Luftzutrittsöffnungen, die vom Außenraum durch die Wand des Auslaßstutzens in das Innere reichen, sorgen dafür, daß Luftblasen in den Güllestrom eindringen und gewährleisten damit gleichzeitig eine gleichmäßige Gülleversorgung aller Schläuche.

Um eine Verminderung der Geruchsbelästigung beim Ausbringen der Gülle zu erreichen, kann man vorzugsweise anstelle der sogenannten Schleppschläuche längs der Verteilerrohre ein oder mehrere Vorhangteile aus einem gummielastischen Material (Kunststoff-Folie oder Gummi) in Reihe so anordnen, daß die vorhangteile die Verteilerrohre allseitig umgeben, wobei die Länge der Vorhangteile so gewählt ist, daß ihre freien Ränder beim Ausbringen der Gülle mindestens bis zur Ackerfläche reichen.

Die durch die Auslauföffnungen der Verteilerrohre nach unten auf die Ackerfläche fließende Gülle wird daher durch die Vorhangteile gegenüber der Umgebungsluft praktisch vollständig abgeschirmt.
Weitere vorteilhafte Ausgestaltungen des erfindungsgemäßen Gülleverteilers ergeben sich aus den Unteransprüchen und der nachstehenden Beschreibung von Ausführungsbeispielen anhand der Zeichnung.

Hierin zeigen:
- Fig. 1: einen Gülleverteiler in Verteilerstellung von hinten gesehen mit Verteilerrohren, deren Ausflußöffnungen mit Schläuchen verbunden sind, die über Förderschnecken mit Gülle versorgt werden,
- Fig.1a: einen Gülleverteiler nach Fig.1 mit Abstandshaltern für die Schläuche und Staukasten für Feststoffe,
- Fig. 2: eine schematische Darstellung des Gülleverteilers nach Fig. 1, mit in den Verteilerrohren befindlichen Förderschnecken,
- Fig. 3: ein Querschnittsbild eines Verteilerrohres in ovaler Form
- Fig. 4: ein Querschnittsbild eines Verteilerrohres, aus dem die Aufteilung in einen oberen und einen unteren Raum ersichtlich ist,
- Fig. 5: einen vergrößerten Teilbereich des oberen und unteren Raumes des Verteilerrohres mit Schnecke und Trennplatten in aufgebrochener Darstellung,

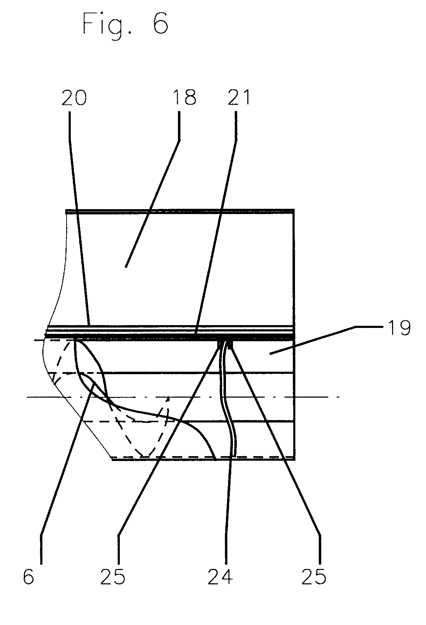

- Fig. 6: einen Ausschnitt aus Fig. 5 in abgebrochener Darstellung, die das Innere eines Verteilerrohres und die Exzenterübertragung an die Trennplatte zeigt,
- Fig. 7: eine Draufsicht auf einen Teilbereich der aufeinanderliegenden Trennplatten,
- Fig. 8: ein Schnittbild durch das Verteilerrohr nach Fig. 4 mit aufgeklapptem oberen Raum,
- Fig. 9: einen vergrößerten Teilbereich des oberen und unteren Raumes des Verteilerrohres nach Fig.5 mit Rotor,
- Fig.10: einen Längsschnitt durch ein Gülleverteilerrohr,
- Fig. 11: einen Längsschnitt längs der Linie A....A der Fig. 10,
- Fig. 12: einen Querschnitt längs der Linie B....B der Fig. 10,
- Fig. 13: eine perspektivische Darstellung der unteren doppelwandigen Halbschale des Verteilerrohres mit Verstellelement,
- Fig. 14: einen Querschnitt durch ein Verteilerrohr mit aufgestecktem Schleppschlauch und einem im Auslaufstutzen angebrachten Luftloch,
- Fig. 15: das in Fig. 14 gezeigte Gülleverteilerrohr mit einem Lufteinlaßrohr,
- Fig. 16: das in Fig. 15 gezeigte Verteilerrohr mit einer anderen Anordnung des Lufteinlaßrohres,
- Fig. 17: einen Güllevorratsbehälter mit längs der Verteilerrohren angeordneten Vorhangteilen,
- Fig. 18: eine Detaildarstellung der Befestigung der Vorhangteile an einem Rahmen, der das Verteilerrohr umgibt in abgebrochener Darstellung,
- Fig. 19: den die Verteilerrohre umgebenden Rahmen von oben gesehen,
- Fig. 20: einen Gülleverteiler mit Förderschnecke und Vorhangteilen in Arbeitsstellung,
- Fig. 21: ein Schnittbild durch ein Verteilerrohr mit Vorhangteilen und
- Fig. 22: ein Schnittbild durch ein Verteilerrohr mit Rahmengestell und an diesem befestigten Vorhangteilen.

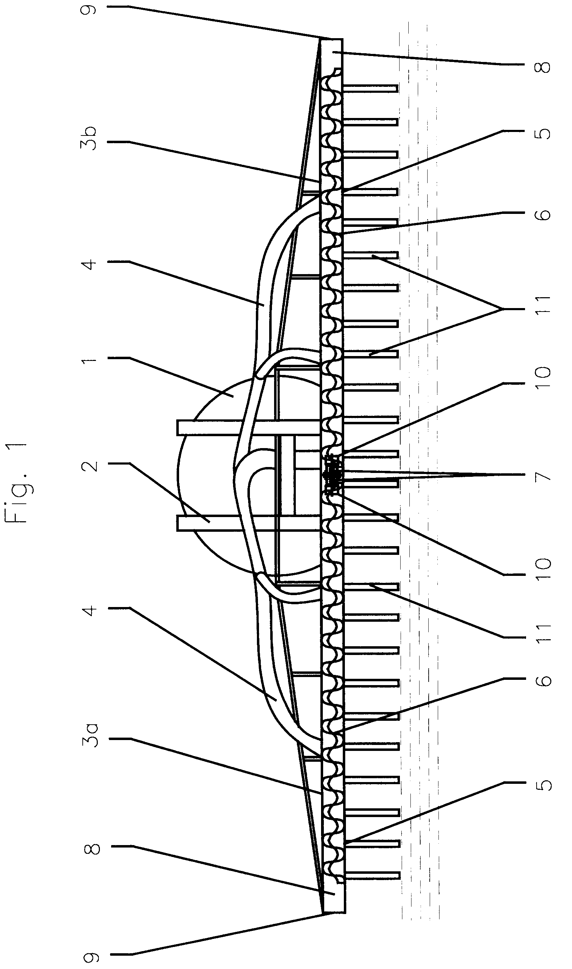

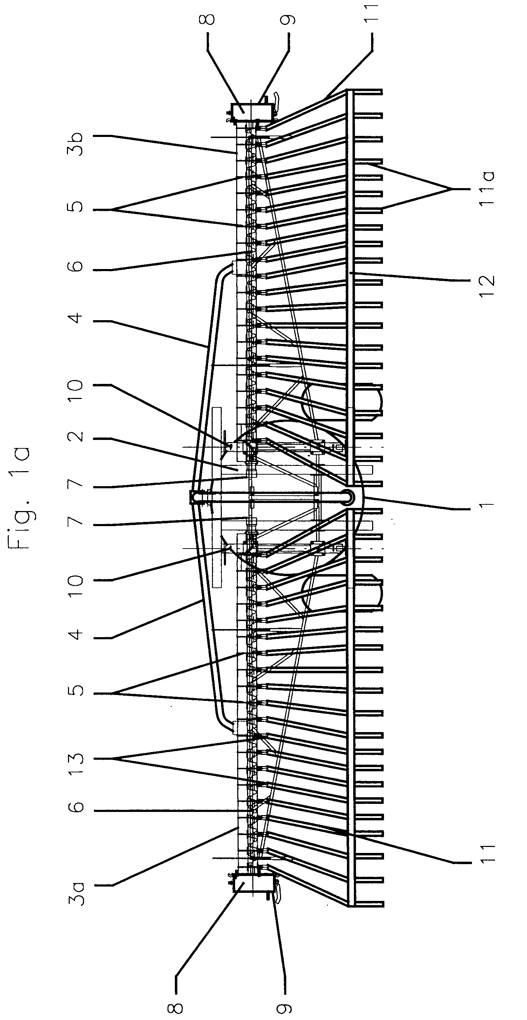

Sich entsprechende Teile sind in den Figuren mit übereinstimmenden Bezugszeichen gekennzeichnet.
An der Rückseite eines Güllefasses 1 befindet sich ein Hubgerüst 2 für die Absenkung eines Gülleverteilers in eine Verteilerstellung, wie sie in Fig. 1 und 1a gezeigt sind und in eine angehobene Transportstellung (nicht dargestellt).

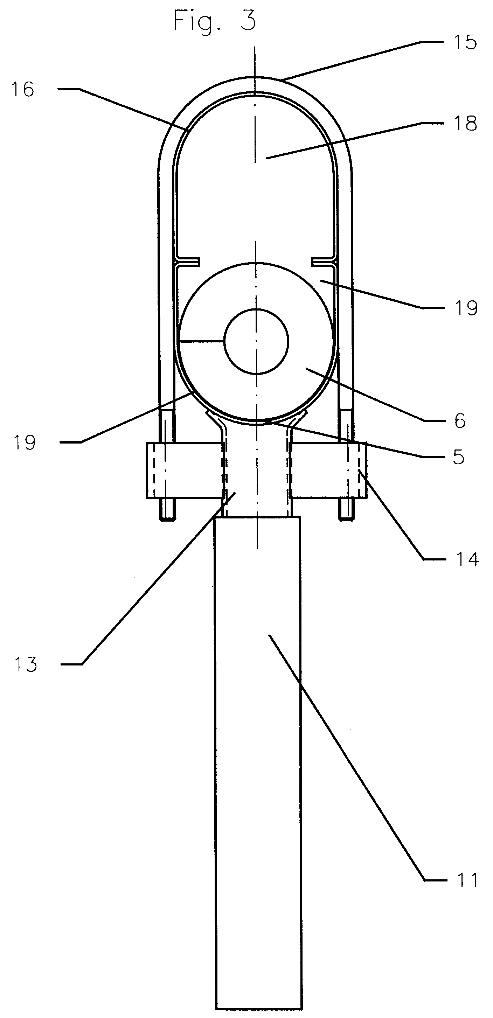

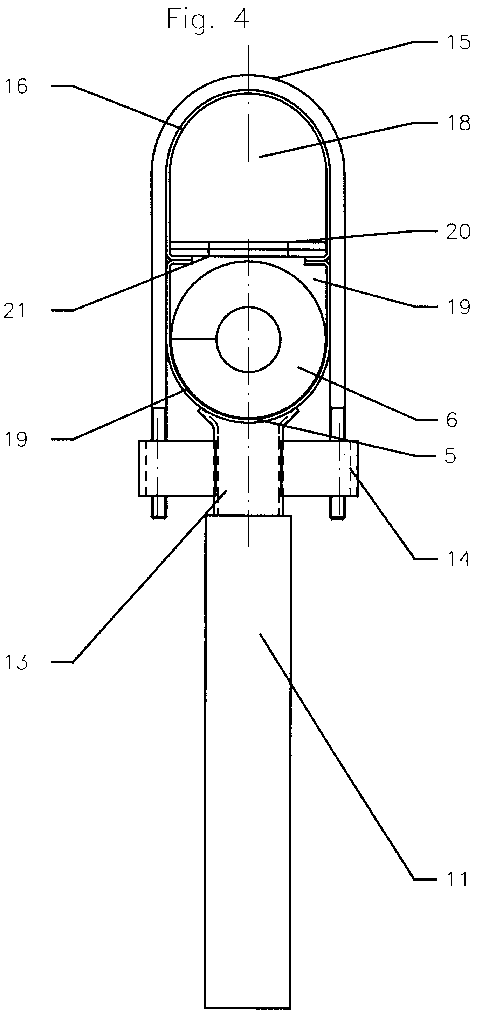

Die im Güllefass 1 befindliche Gülle wird über Zuführungsleitungen 4, Verteilerrohren 3a und 3b des Gülleverteilers zugeführt, die auf ihrem der Ackerfläche zugewandten Bereich Ausflußöffnungen 5 für die Gülle aufweisen. Im Rohrinneren jedes Rohrabschnittes 3a und 3b befindet sich als Fördereinrichtung eine Förderschnecke 6, die von einem Antriebsmotor 7 in Förderrichtung zu den jeweiligen außen liegenden Enden der Rohrabschnitte 3a und 3b angetrieben wird.Die Förder- schnecken 6 haben die Aufgabe, in der Gülle enthaltene Fremdkörper oder Feststoffe von den Ausflußöffnungen 5 fernzuhalten oder von diesen zu befreien und zum jeweiligen Rohrende hin zu befördern.Hierzu sind die Schneckenwindungen an ihrem Außenrand angeschliffen und gleiten längs der Innenwand der Verteilerrohre 3a,b. An den äußeren Enden der Rohrabschnitte 3 a,b befindet sich jeweils ein Stauraum 8, der mit einem abnehmbaren Deckel 9 verschlossen ist. Die sich ansammelnden Festkörper können dann von der Bedienungsperson entfernt werden. Infolge der Befreiung der Gülle von Festkörpern ist eine kontinuierliche Verteilung der Gülle aus sämtlichen Ausflußöffnungen auf den Ackerboden gewährleistet. Die Verteilerrohre 3 a,b sind um zwei vertikale Achsen 10 schwenkbar und mit bzw. an dem Hubgerüst 2 auf-und abbewegbar. Auf jede der Ausflußöffnungen 5, die mit Ausflußstutzen 13 versehen sind, ist eine Ausflußleitung , in Form eines Schlauches 11,aufgesteckt. Die Länge der Schläuche 11 ist bei in Verteilerstellung abgesenktem Gülleverteiler mindestens so gewählt, daß die freien Enden der Schläuche 11 während der Fahrt des Güllefasses 1 über den Ackerboden entlangschleifen. Die Auslauföffnungen 5 sind längs der Verteilerrohre 3a,b so dicht wie möglich angeordnet, um eine möglichst große Anzahl von Schläuchen 11 unterzubringen. Ihre Abstände im Bereich des Ackerbodens kann man mit Hilfe eines Abstandshalters 12, der im Bereich der Schlauchenden11a angebracht ist, vergrößern, so daß die Bearbeitungsbreite des Gülleverteilers größer wird, als die Gesamtlänge der Verteilerrohre 3a,b ausmacht. Das auf die Auslaufstutzen 13 aufgeschobene Schlauchende wird mittels eines Schlauchhalters 14 befestigt, damit es sich während das freie Schlauchende 11a über den Ackerboden schleift, nicht ablösen kann. Im Bereich der Ausflußöffnungen 5 ist jeweils ein Bügel 15 über die Gehäuseschale 16 der Verteilerrohre 3a,b gelegt, an dem der Schlauchhalter 14 befestigt ist (siehe Fig. 3 und 4).

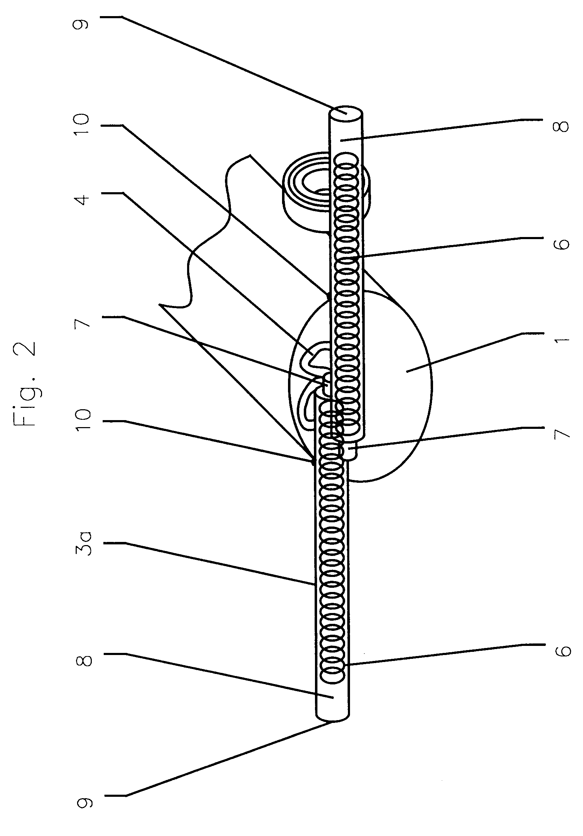

In Fig. 2 ist der in der Fig. 1 und 1a gezeigte Gülleverteiler in vereinfachter Darstellung schematisch wiedergegeben. In Fig. 3 und 4 ist ein Querschnitt durch ein Verteilerrohr 3 in Form einer geschlossenen Gehäuseschale 16 gezeigt. Die Gehäuseschale 16 weist eine etwa ovale Form auf. Der obere Raum 18 ist mit der Güllezuleitung 4 verbunden (nicht dargestellt) und ist während des Arbeitsablaufes zumindest zum Teil mit Gülle gefüllt, die ihm aus dem Güllefass 1 zufließt. Der untere Raum 19 weist in seinem Bodenbereich eine Vielzahl von Auslauföffnungen 5 auf, die sich jeweils in einen Auslaufstutzen 13a fortsetzen, auf den das Ende des Schlauches 11 aufgeschoben ist.

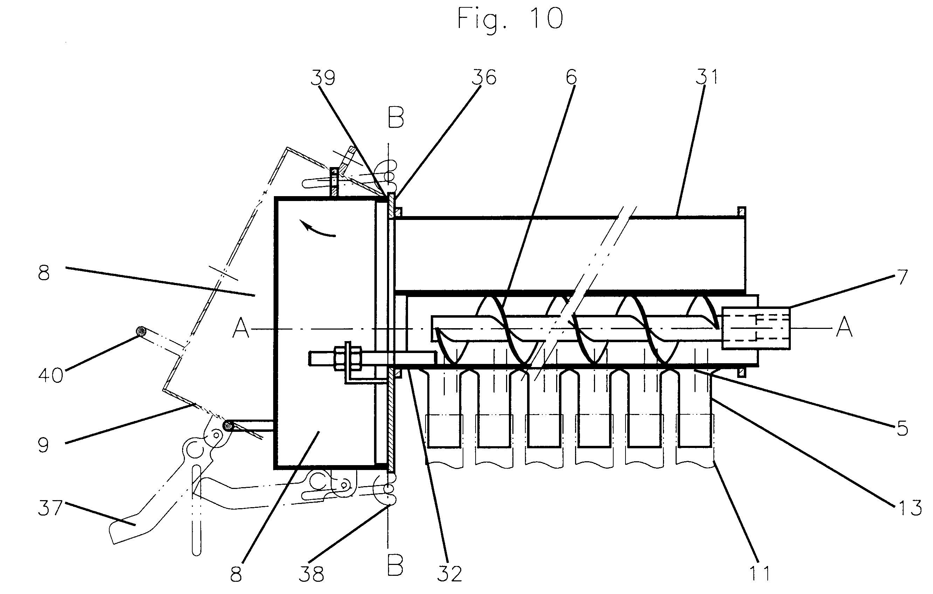

Im unteren Raum 19 des Verteilerrohres 3 befindet sich die Förderschnecke 6, die von einem Motor 7 angetrieben wird, der am Ende des Verteilerrohres3 angeordnet ist. Die Förderrichtung der Förderschnecke 6 ist zum freien Ende des Verteilerrohres gerichtet. Dort endet das Verteilerrohr 3 in einem Staukasten 8, siehe insbesondere Fig. 10, in dem die größeren Festkörper, die sich in der Gülle befinden und die Ausflußöffnungen 5 verstopfen könnten,aber mit Hilfe der Bewegung der Förderschnecke von den Ausflußöffnungen 5 entfernt wurden, transportiert werden. Eine Bedienungsperson kann von Zeit zu Zeit diesen Staukasten 8 durch Verschwenken seines Deckels 9 entleeren.

Da durch die Förderschnecke 6 die dem Verteilerrohr 3 zugeführte Gülle in Richtung zum Staukasten 8 des Verteilerrohres 3 gefördert wird, baut sich im Endbereich des Verteilerrohres 3 ein steigender Druck auf, der sich aber in den oberen Raum 18 der Gehäuseschale 16 entspannen kann. Ein Güllerückstau wird hierdurch vermieden.

Gemäß Fig. 4 ist die Gehäuseschale 16 durch zwei Trennplatten 20,21 geteilt, die einen oberen Raum 18 gegen einen unteren Raum 19 abgrenzen. Die beiden Trennplatten 20,21 liegen unmittelbar übereinander und verlaufen in Längsrichtung der Verteilerrohre. Beide Trennplatten 20,21 sind in ihrer Längsrichtung verschiebbar angeordnet und können den oberen Raum 18 gegen den unteren Raum 19 in einer bestimmten Verschiebestellung gegen den Durchtritt der Gülle aus dem oberen Raum 18 in den unteren Raum 19 abdichten. Hierzu weisen beide Trennplatten 20,21 eine übereinstimmende Vielzahl von Durchlaßöffnungen 22 und 23 auf. Vor Arbeitsbeginn kann die Verschiebestellung der beiden Trennplatten 20,21 so gewählt werden, daß die untere Trennplatte 21, die im folgenden als Exzenterplatte 21 bezeichnet wird, die Durchflußöffnungen 22 der oberen Platte 20, die im folgenden als Stellplatte 20 bezeichnet wird, vollständig abdeckt. Durch Öffnung der Durchlaßöffnungen 22 und 23 gelangt die Gülle gleichzeitig in gleicher Menge an die im unteren Raum 19 befindliche Förderschnecke 6 und an die längs des Verteilerrohres 3 angeordneten Auslaßöffnungen 5. Eine kontinuierliche Hin- und Herverschiebung der unteren Platte 21 um einen Hubweg, der etwa der Größe der Durchlaßöffnungen 22 und 23 entspricht, bewirkt abwechselnd einen Verschluß des unteren Raumes 19 gegen den oberen Raum 18 oder einen Güllestrom aus dem oberen Raum 18 durch die in Deckung liegenden Durchlaßöffnungen 22, 23 beider Platten 20,21 in den unteren Raum 19. Hierbei ist gewährleistet, daß der Güllezustrom durch alle Durchlaßöffnungen 22,23 gleichmäßig erfolgt, da der obere Raum 18 ständig unter dem Druck der aus dem Güllefass zuströmenden Gülle steht. Das Verteilerrohr 3 wird auf seiner gesamten Länge gleichmäßig mit Gülle versorgt.

Die Hin- und Herbewegung der Exzenterplatte 21 wird bewirkt durch die Drehung der Förderschnecke 6, an der eine Kurvenfläche 24 angeordnet ist, die sich zusammen mit der Förderschnecke 6 dreht.An der Unterseite der Exzenterplatte 21 befinden sich nach unten ragende Zapfen 25, die bei der Drehung der Schnecke 6 längs der Kurvenfläche 24 gleiten und hierbei der Exzenterplatte 21 die gewünschte Hin-und Herbewegung vermitteln. Dabei ist die Gestalt der Kurvenfläche 24 so gewählt, daß die vermittelte Hin- und Herbewegung der Exzenterplatte 21 eine Streckenlänge aufweist, die den axialen Ausmaßen der Durchlaßöffnungen 22, 23 der beiden Platten 20 und 21 entspricht. Hierdurch ist gewährleistet, daß in ihrer einen Stellung eine vollständige Abdeckung der Durchlaßöffnung 22 der Stellplatte 20 erzielt wird und in der anderen Stellung eine vollständige Deckung der Öffnungen 22,23 beider Platten 20,21 vorliegt und damit ein maximal möglicher Güllezustrom in den unteren Raum 19 erfolgt.

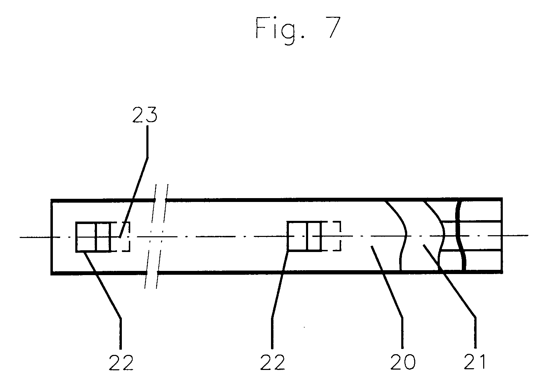

Eine besonders vorteilhafte Eigenschaft wird aber durch die ebenfalls verschiebbare Anordnung der Stellplatte 20 erreicht. Die Stellplatte 20 kann dadurch vor Arbeitsbeginn von der Bedienungsperson in einer gewünschten Lage justiert werden. Sie bleibt während des Arbeitsvorganges in dieser Stellung und durch sie wird die maximal gewünschte Durchflußmenge der Gülle bestimmt. Wie aus Fig. 7 ersichtlich, liegen beide Platten 20, 21 unmittelbar übereinander und weisen eine übereinstimmende Anzahl von Durchflußöffnungen 22,23 auf. Überdecken sich die Durchflußöffnungen 22,23 der Stellplatte 20 und der Exzenterplatte 21 bei der Hin-und Herbewegung der Exzenterplatte 21 vollständig, so wird, wie gesagt, der maximale Gülledurchfluß in den unteren Raum 19 erreicht und auf diese Weise auch die maximal mögliche Düngung des Ackerbodens während der Fahrt des Güllefasses erzielt. Verschiebt die Bedienungsperson aber vor Arbeitsbeginn die Stellplatte 20 um eine gewisse Strecke relativ zur Exzenterplatte 21, beispielsweise um eine Strecke, die der Hälfte der Breitenausdehnung einer Durchflußöffnung 22,23 entspricht, dann wird bei gleicher Hinund Herbewegung der Exzenterplatte 21 bei maximal erreichbarer Deckung der Durchflußöffnungen 22,23 auch nur die halbe Fläche der Durchflußöffnungen 22,23 für den Gülledurchfluß freigegeben und damit die Ausflußmenge der Gülle auf den Acker auf die Hälfte reduziert. Das heißt, es wird eine Anpassung der ausströmenden Güllemenge an die Erfordernisse des Ackerbodens durch die einstellung der Stellplatte 20 möglich und damit eine unerwünschte Überdündung eines Bodens vermieden.

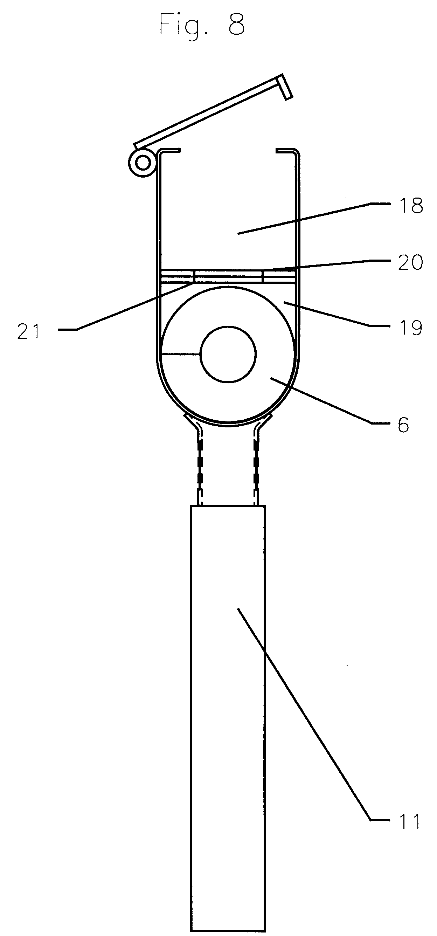

In Fig. 8 ist ein Schnittbild durch das Verteilerrohr 3 gezeigt, dessen oberer Raum 18 mittels einer Klappe 26 aufklappbar ist, damit größere Festkörper, die sich in der Gülle befinden und ein oder mehrere Durchlaßöffnungen 22,23 verstopft haben und die Funktion der Stellplatte 20 und Exzenterplatte 21 blockieren, von der Bedienungsperson entfernt werden können.

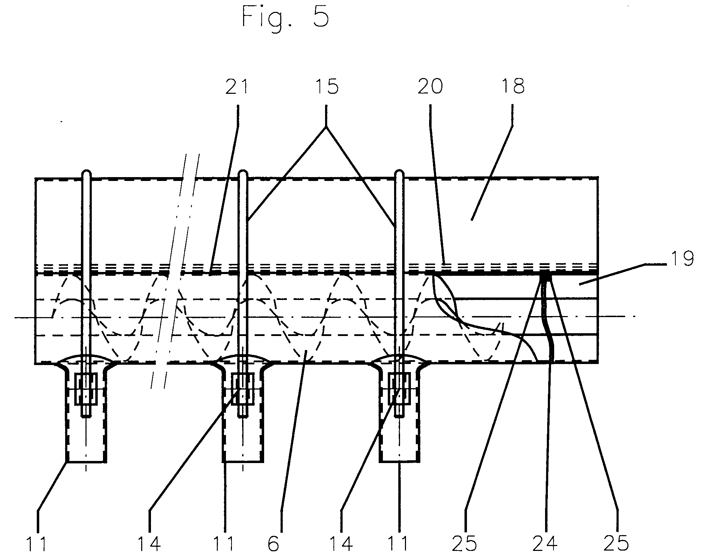

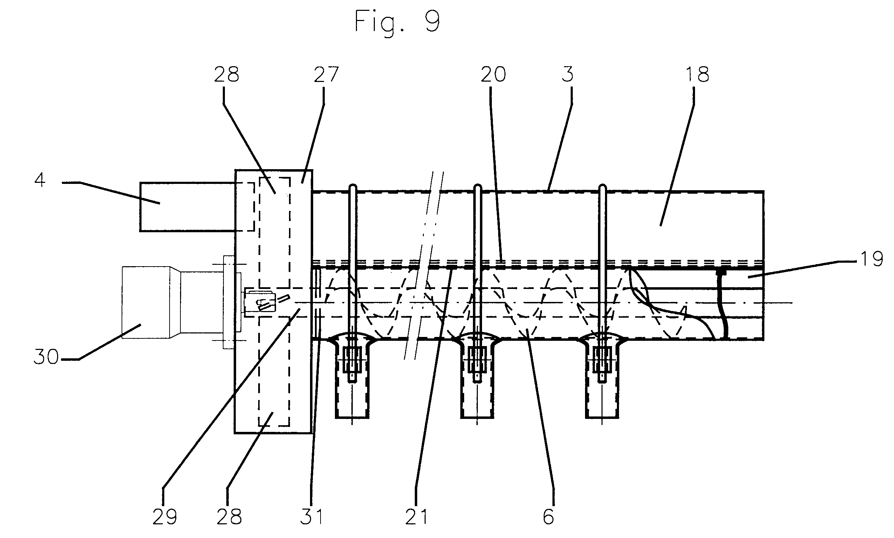

In Fig. 9 ist auf das Verteilerrohr 3, das im Zusammenhang mit Fig. 5 bereits beschrieben wurde, ein Rotor 27 aufgesetzt. Der Rotor 27 umfaßt eine Vielzahl von Schneidblättern 28, die im Beispiel auf dem einen Ende der Antriebswelle 29 für die Förderschnecke 6 angebracht sind.

Die Antriebswelle wird von dem Motor 30 angetrieben. Das Ende der Güllezuführungsleitung 4 ragt in den oberen Bereich des Rotors 27. Festkörper, die sich in der Gülle befinden, werden zerkleinert, bevor sie in das Verteilerrohr 3 gelangen. Bei Vorliegen von Trennplatten 20,21 ist der untere Raum 19 des Verteilerrohres 3 durch eine Wand 31 vom Rotor 27 abgeschottet, so daß die zerkleinerte Gülle ausschließlich in den oberen Raum 18 gelangt.

Diese Wand 31 kann entfallen, wenn, wie in Fig. 3 gezeigt, das Verteilerrohr nicht durch Trennplatten unterteilt ist.

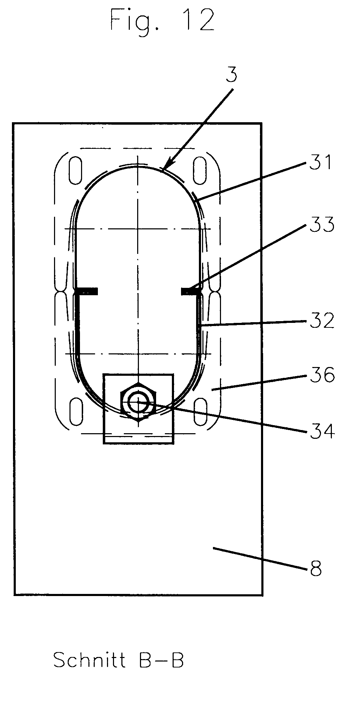

Das in Fig. 12 im Querschnitt gezeigte Gülleverteilerrohr 3 besteht aus zwei Halbschalen 31 und 32, die übereinander liegen und längs Innenflanschen 33 zu einem Rohr mit ovalem Querschnitt verbunden sind. Die Gülle wird über einen nicht dargestellten Verbindungsschlauch der oberen Halbschale 31 zugeführt. Die untere Halbschale 32 weist eine Vielzahl von Ausflußöffnungen 5 auf. Jede Ausflußöffnung 5 ist von einem außerhalb der Halbschale 32 angeordneten Stutzen 13 umgeben, auf den Verteilerschläuche 11 aufgesteckt sind.

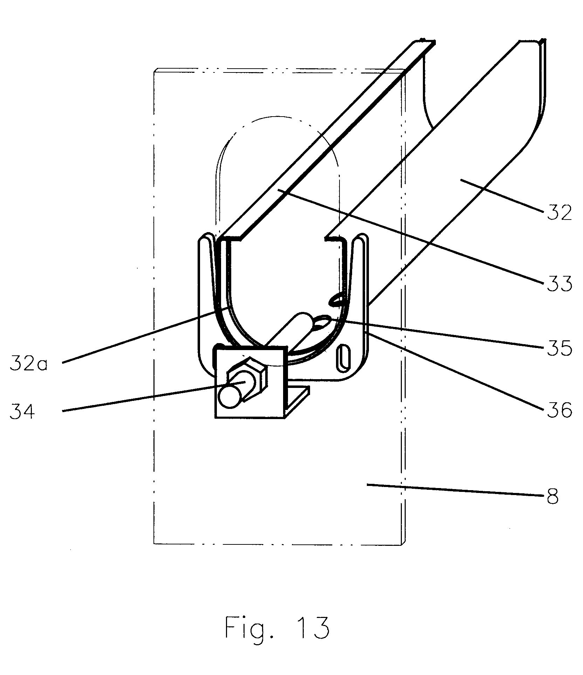

Die untere Halbschale 32 ist, wie aus Fig.13 am besten erkennbar, doppelwandig ausgebildet. Die Innenwandschale 32a ist in der, die Außenwand bildenden Halbschale 32 längsverschiebbar angeordnet. Ihre Verschiebung erfolgt nach Fig.13 durch ein als Spindel 34 ausgebildetes Verstellelement, welches von Hand einstellbar ist. In der Innenwandschale 32a sind ebenfalls Durchflußöffnungen 35 in gleicher Anzahl und Größe wie in der Außenwandschale 32, mit diesen deckungsgleich angeordnet. Durch entsprechende Einstellung der Spindel 34 ist die Bedienungsperson in der Lage, durch Verschiebung der Innenwandschale 32 die Durchflußöffnungen 35 relativ zu den Durchflußöffnungen 5 zu verschieben und damit den für den Durchfluß der Gülle offenen Bereich der Durchflußöffnungen 5 zu bestimmen. Damit kann erreicht werden, daß eine bestimmbare, gegebenenfalls auch geringere Menge an Gülle durch die Schläuche 11 auf das Feld ausfließt als dies der Fall wäre, wenn die Durchflußöffnungen 35 und die Durchflußöffnungen 5 genau übereinander liegen.

Da erfahrungsgemäß sich die Durchflußöffnungen 5 und 35 durch in der Gülle befindliche Feststoffe verstopfen - dies tritt insbesondere dann ein, wenn der Durchmesser der Durchflußöffnungen 5 durch Verschieben der Innenwandschale 32a verkleinert wurde - kann man anstelle des arretierbaren Verstellelementes 34 einem hin- und herbewegbaren Verstellelemement (nicht dargestellt) den Vorzug geben. Diese Hin- und Herbewegung kann entweder durch Verwendung eines Exzenters oder durch Verwendung eines Kolben/Zylinderaggregates erfolgen, wobei der Kolbenhub so wählbar ist, daß bei der Hin- und Herbewegung jeweils genau der Bereich der übereinander liegenden Durchflußöffnungen 35 und 5 verschlossen und wieder freigegeben wird, den man für den erforderlichen Gülleausfluß benötigt.

Am einen Ende des Verteilerrohres 3 ist über einen Flansch 36 der Staukasten 8 angebracht. Der Staukasten 8 ist hier schwenkbar am Flansch 36 angelenkt und mittels eines Hebels 37 und Verschlußhakens 38 in Verschlußstellung gehalten. Die Förderschnecke 6 befindet sich, über den Antrieb 7 drehbar, im Innern der unteren Halbschale 32 und hat die Aufgabe, die dem Verteilerrohr zugeführte Gülle ständig zu bewegen und die in der Gülleflüssigkeit enthaltenen Festkörper von den Ausflußöffnungen 5,35 weg und zu dem Staukasten 8 hin zu bewegen. Von Zeit zu Zeit wird der Staukasten 8 durch Verschwenken um das Gelenk 39 in die in Fig.10 gestrichelt dargestellte Stellung gebracht und entleert. Hierzu ist am Staukasten 8 ein Handgriff 40 angeordnet.

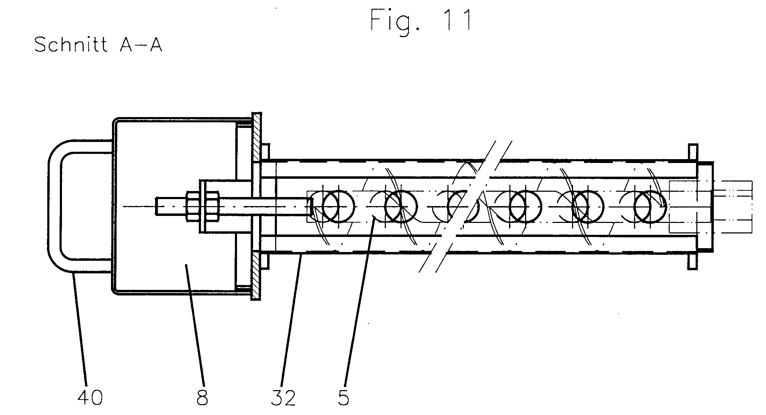

Aus Fig. 11 ist ersichtlich, wie durch Verschieben der Innenwandschale 32a gegenüber der unteren Halbschale 321b der Durchflußbereich jeder Ausflußöffnung 53 reduzierbar ist.

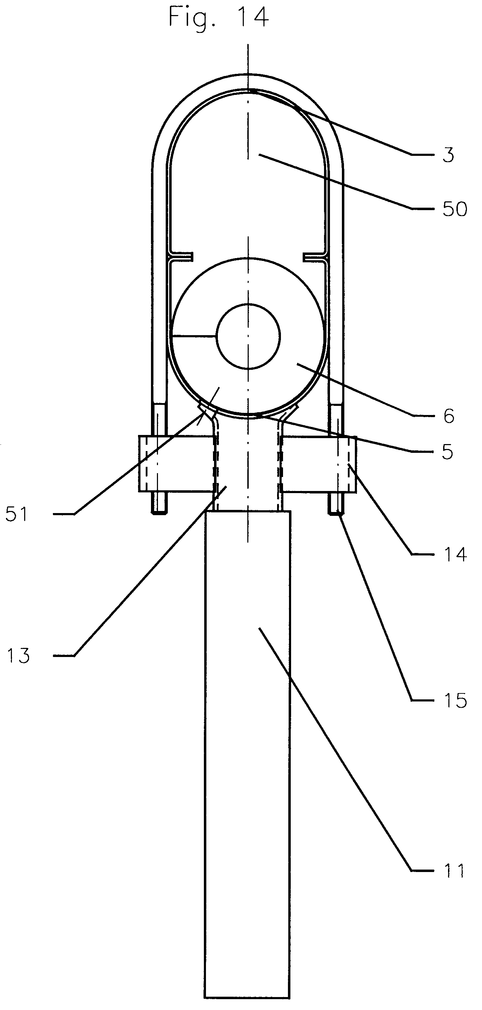

Der in Fig. 14 gezeigte Gülleverteiler umfaßt ein ebenfalls im Querschnitt ovales rohrförmiges Verteilerrohr 3 . Im unteren Bereich des Verteilerrohrs 3 ist die Förderschnecke 6 angeordnet, die dazu dient, die aus dem Güllevorratsbehälter angelieferte Gülle möglichst gleichmäßig den längs des Verteilerrohrs 3 vorgesehenen Auslaßöffnungen 5 zuzuführen. Wie aus Fig. 14 ersichtlich, befindet sich im unteren Bereich des Verteilerrohres 3 die Auslaßöffnung 5. Sie ist mit dem Auslaßstutzen 13 verbunden, auf den das eine Ende des Schleppschlauches 11 aufgesteckt ist, durch dessen anderes offenes Ende während des Arbeitsvorganges beim Überfahren des Ackerbodens die Gülle austritt. Das Verteilerrohr 3 wird von dem Bügel 15 umgriffen, an dem die Halteeinrichtung 14 für den Auslaßstutzen 13 befestigt ist.

Die aus dem Güllevorratsbehälter zugeführte Gülle füllt das Verteilerrohr 3 unter Freilassung eines sich über der Förderschnecke 6 befindlichen Güllefreiraumes 50.

Im Bereich zwischen dem Verteilerrohr 3 und dem Auslaßstutzen 13 ist ein Luftspalt 51 vorgesehen, der die Wand des Auslaßstutzens 13 vollständig durchdringt. Die Aufgabe dieses Luftspaltes 51 ist, einen gleichmäßigen Auslauf der Gülle durch den Schlauch 11 zu gewährleisten. Dies wird dadurch ermöglicht, daß die nach unten durch den Schlauch 11 strömende Gülle auf die im Außenraum vorhandene Luft eine Sogwirkung ausübt. Hierdurch gelangen Luftblasen durch den Luftspalt 51 in den Güllestrom und bewirken ein wiederholtes Abreißen des Güllestromes, so daß sich keine Sogwirkung auf die im Verteilerrohr 3 vorhandene Gülle ausbilden kann. Eine gegenseitige Beeinflussung der Güllezufuhr an einander benachbarte Schläuche 11 wird somit unterbunden. Ein gleichmäßiger Güllezustrom an alle Schläuche und damit auch eine gleichmäßige Gülleausbringung auf den Ackerboden ist gewährleistet.

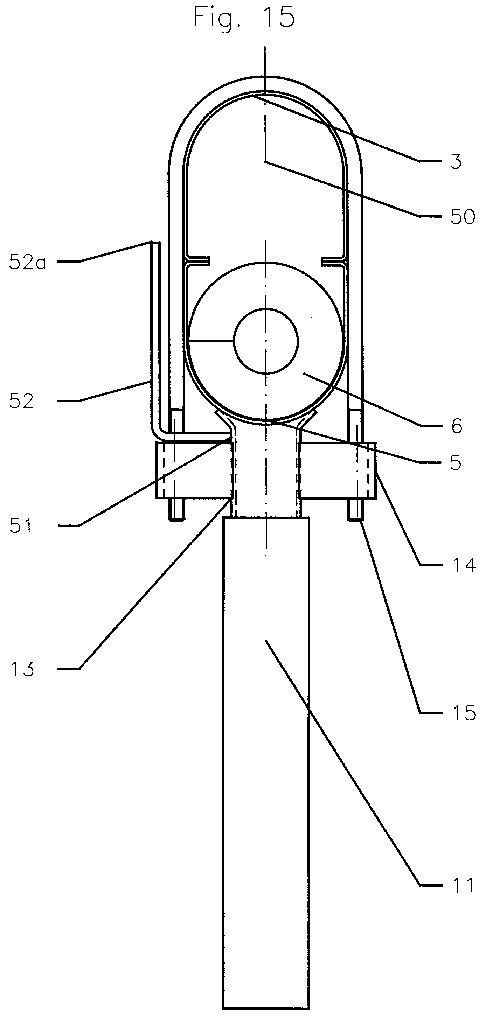

Um den Gülleaustritt durch den Luftspalt bei beendeter Arbeit zu verhindern, ist nach Fig. 15 über den Luftspalt 51 ein Rohr 52 geschweißt, das nach oben in Richtung des Verteilerrohres 3 ragt und an seinem freien Ende offen ist.

Am dem mit dem Auslaufstutzen verbundenen Ende des Rohres 52 kann ein Rückschlagventil 52a vorgesehen sein, daß nur nach innen öffnet, aber den Güllestrom nach außen sperrt.

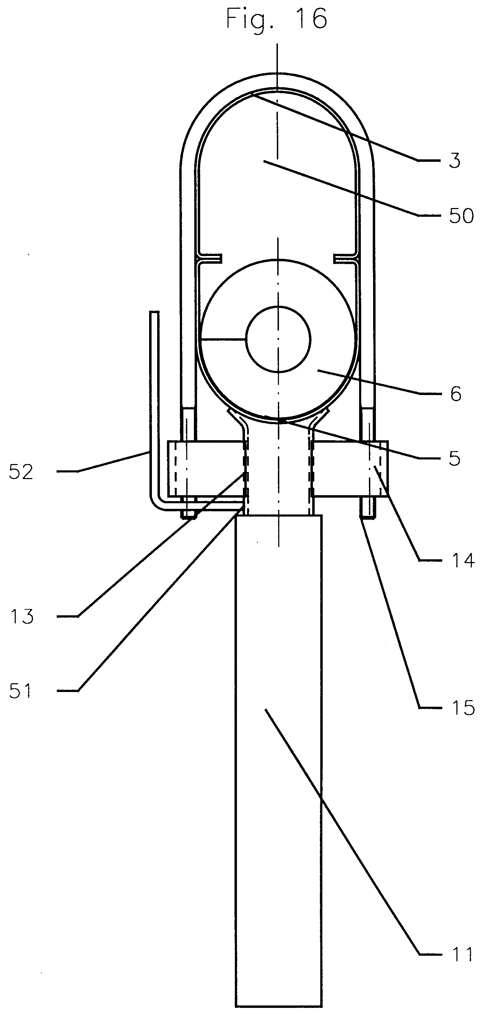

Nach Fig. 16 ist der Luftspalt 51 etwas näher im Bereich des Schlauchendes 11 im Auslaßstutzen 13 angeordnet und ebenfalls mit einem Luftrohr 52 verbunden.

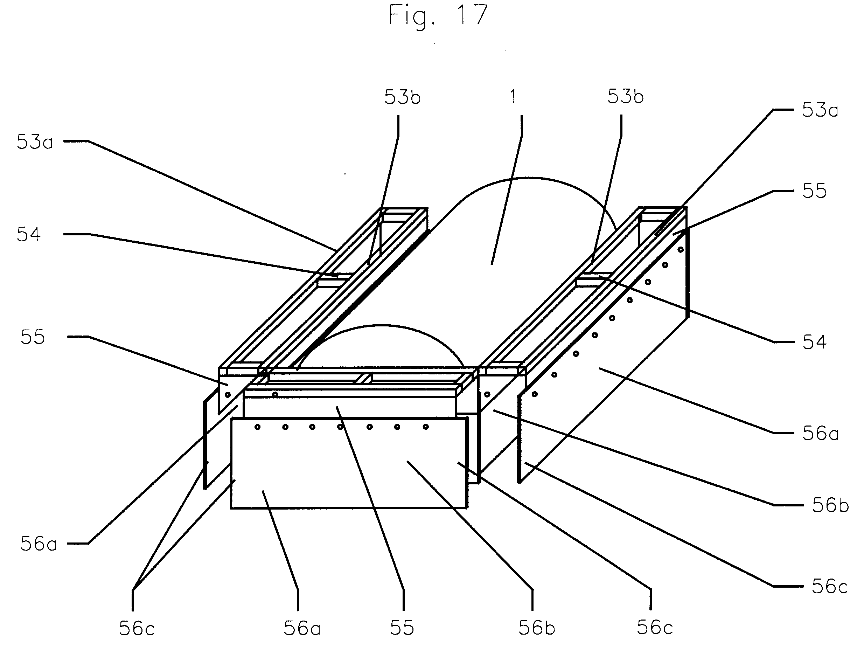

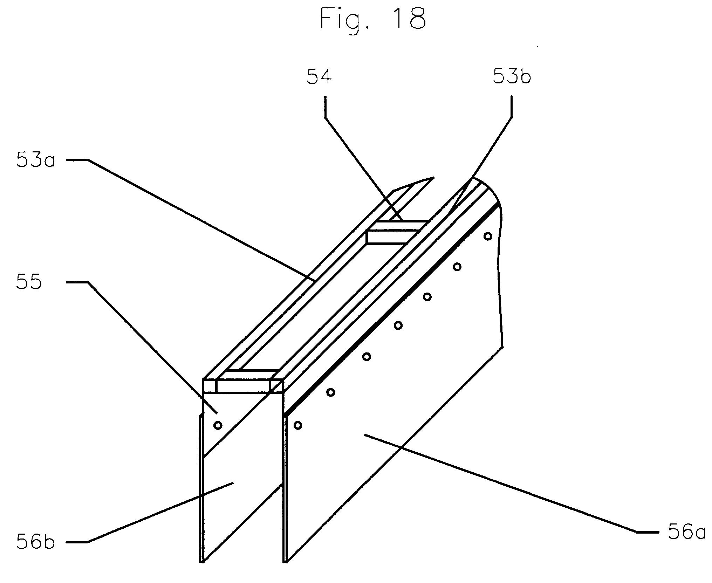

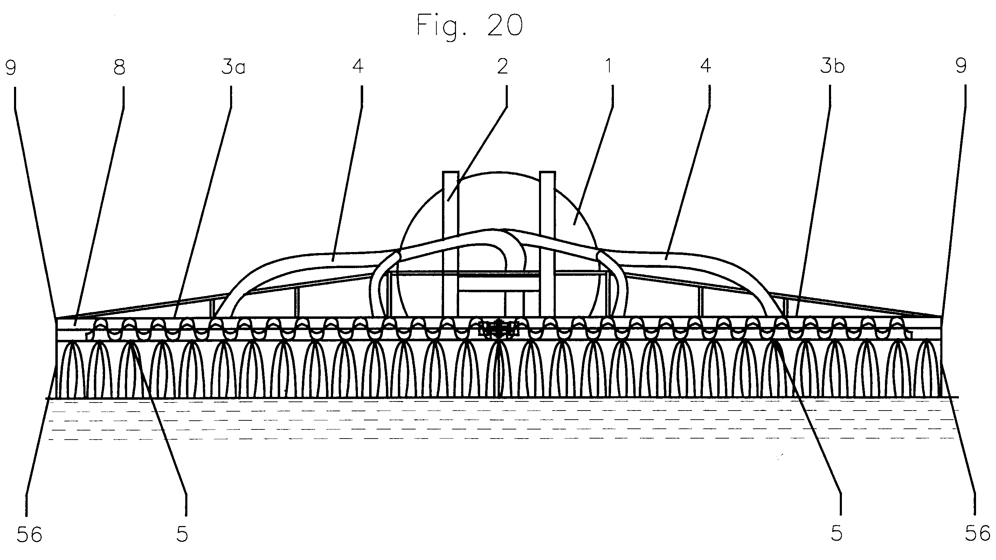

In den Fig. 17 bis 22 ist ein Gülleverteiler dargestellt, der die unerwünschte Geruchsbelästigung der Umgebung beim Ausbringen der Gülle auf das Feld anstelle mit Hilfe von Schleppschläuchen mittels den Gülleausfluß umgebenden Vorhängen beseitigt. Aus den Fig. ist ersichtlich, daß Rahmengestelle 53 oberhalb der in diesen Figuren nicht darge stellten Verteilerrohren 3 um diese herumgeführt sind. Die parallelen Längsstreben 53a,53b der Rahmengestelle 53 sind von einer Mehrzahl Querstreben 54 gehalten. Über Haltebleche 55 sind Vorhangabschnitte 56a und 56b aus einem gummielastischen Folienmaterial an den parallelen Längsstreben 53a,53b der Rahmengestelle 53 befestigt.

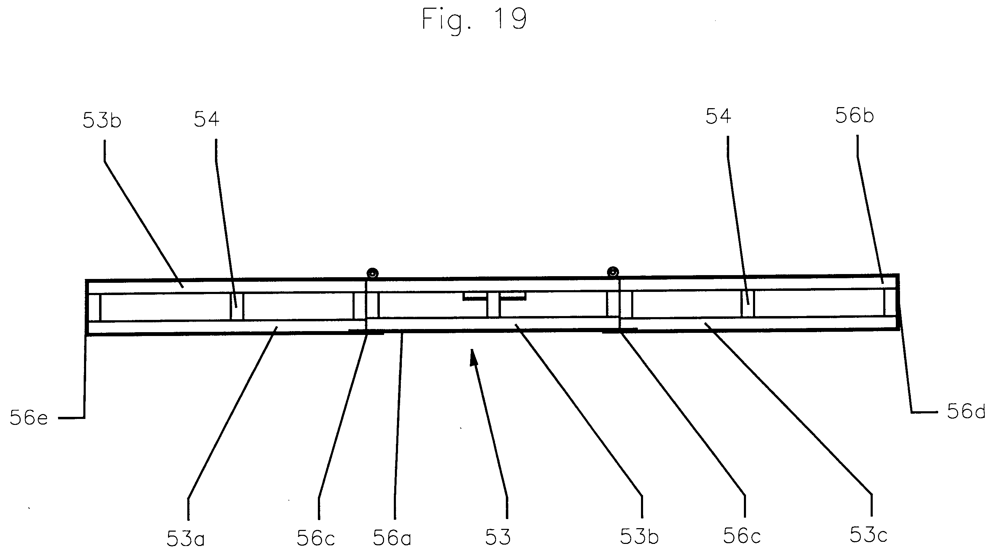

Die Länge der Vorhangabschnitte 56a und 56b entspricht den jeweiligen Abschnitten der Verteilerrohre 3a,3b und 3c. Im Bereich der Schwenkachsen 10 überlappen sich die jeweiligen Enden 56 c der Vorhangabschnitte 56a und 56b(siehe Fig. 19).

An den freien Enden 53a bzw. 53c des Rahmengestells 53 sind die Vorhangabschnitte 56d und 56e herumgeführt, so daß sie bei ausgefahrenen, in Arbeitsstellung abgesenkten Verteilerrohren 3 einen geschlossenen Bereich umgrenzen, der vom oberen Rand der Verteilerrohre 3 bis zum Boden, d.h. bis zur Ackerfläche hinreicht.

In Verteilerstellung, d.h. bei abgesenkten und ausgefahrenen Verteilerrohren 3 läuft die Gülle aus den Auslauföffnungen 5 nach unten auf die Ackerfläche. Durch die Wandflächen der Vorhangabschnitte 56a,b,c,d,e wird der Geruch der ausfließenden Gülle gegen die Umgebung vollständig abgeschirmt.

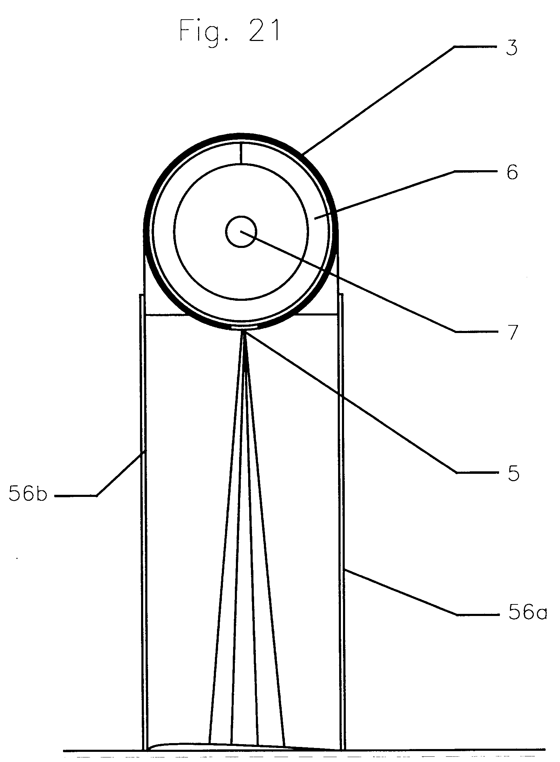

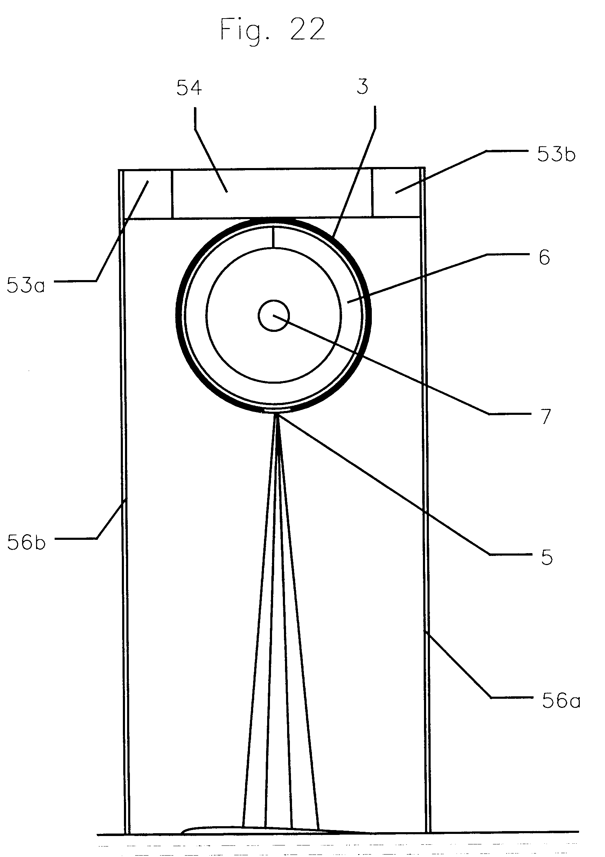

In Fig. 21 ist zur Verdeutlichung ein Querschnitt durch ein Verteilerrohr 3 mit von dem Motor 7 angetriebener Förderschnecke 6 gezeigt. Die Gülle läuft aus der Ausflußöffnung 5 nach unten aus dem Verteilerrohr 3. Die Vorhangabschnitte 56a und 56b sind beidseitig des Verteilerrohrs 3 angeordnet.
Dagegen ist nach Fig. 22 oberhalb des Verteilerrohrs 3 ein Rahmengestell 53 mit den Längsstreben 53a und 53b und der Querstrebe 54 vorgesehen, an dem die Vorhangabschnitte 56a bzw. 56b befestigt sind. Auch hier decken die Vorhangabschnitte 56a und 56b sowie die aus dieser Fig. nicht ersichtlichen quer verlaufenden Vorhangabschnitte 56c und 56e den geruchsintensiven Bereich des Gülleverteilers während der Arbeitsphase vollständig ab.

## Patentansprüche

1. Gülleverteiler mit einem oder mehreren langgestreckten Verteilerrohren (3a,3b,3c,3), denen über eine oder mehrere Zuführungsleitungen (4) die in einem fahrharen Vorratsbehälter (1) befindliche Gülle zugeführt wird und die in ihrer Längsrichtung in Abständen voneinander angeordnete, zur Ackerfläche hingerichtete Auslauföffnungen (5) aufweisen, **dadurch gekennzeichnet**, daß der Querschnitt der Verteilerrohre (3,3a,b,c),zumindest im Bereich der Auslauföffnungen (5),etwa halbkreisförmig verläuft und in dem hierdurch gebildeten gekrümmten Bereich der Verteilerrohre in Längsrichtung der Rohre verlaufende, drehbar gelagerte Fördereinrichtungen (6) vorgesehen sind, mit in Abständen voneinander auf deren Achse angeordneten, bis zur Rohrinnenwandung reichenden Fördergliedern, deren freie Enden bei Drehung der Achse entlang der Innenwandung der Verteilerrohre gleiten.

2. Gülleverteiler nach Anspruch 1, **dadurch gekennzeichnet**, daß als Fördereinrichtungen Förderschnecken vorgesehen sind.

3. Gülleverteiler nach Anspruch 1, **dadurch gekennzeichnet**, daß die Außenkanten der Förderglieder angeschliffen sind und sich in unmittelbarer Nachbarschaft zur Innenwandung der Verteilerrohre befinden.

4. Gülleverteiler nach einem der Ansprüche 1 bis 3, **dadurch gekennzeichnet**, daß die Fördereinrichtungen (6) mit einem Antriebsmotor (7) betätigbar sind.

5. Gülleverteiler nach einem der Ansprüche 1 bis 4, **dadurch gekennzeichnet**, daß der Antriebsmotor (7) für die Fördereinrichtung (6) an einem Ende der Verteilerrohre (3) angeordnet ist und die Förderrichtung der Fördereinrichtung jeweils zu dem vom Güllezulauf abgelegenen Ende des Verteilerrohres erfolgt.

6. Gülleverteiler nach einem der vorhergehenden Ansprüche, **dadurch gekennzeichnet**, daß in den Verteilerrohren (3) zwischen dem von dem Güllezulauf abgelegenen Ende der Fördereinrichtung (6) und dem gleichliegenden Ende der Verteilerrohre ein Stauraum (8) vorgesehen ist, der über einen abnehmbaren oder einen mit dem Verteilerrohr schwenkbar verbundenen Verschlußdeckel (9) geöffnet werden kann.

7. Gülleverteiler nach einem der vorhergehenden Ansprüche, **dadurch gekennzeichnet**, daß der Querschnitt der Verteilerrohre (3) so gewählt ist, daß sich über der Fördereinrichtung (6) ein freier, zumindest teilweise mit Gülle befüllbarer Raum befindet.

8. Gülleverteiler nach einem der vorhergehenden Ansprüche, **dadurch gekennzeichnet**, daß das Verteilerrohr (3) aus zwei Halbschalen (18,19) besteht und die Fördereinrichtung (6) in der unteren Halbschale (19) angeordnet ist.

9. Gülleverteiler nach einem der vorhergehenden Ansprüche, **dadurch gekennzeichnet**, daß die obere Halbschale (18) des Verteilerrohres mittels einer Klappe (26) aufklappbar ist.

10. Gülleverteiler nach einem der vorhergehenden Ansprüche, **dadurch gekennzeichnet**, daß über der Fördereinrichtung (6) in dem Verteilerrohr (3) parallel übereinander angeordnete, in Richtung der Längsachse der Verteilerrohre relativ zueinander verschiebbare Trennplatten (20,21) vorgesehen sind, wobei jede Trennplatte mit der gleichen Anzahl von in Abständen voneinander angeordneten Durchlaßöffnungen (22,23) versehen ist, die in einer ersten Verschiebestellung (Verschlußstellung) gegeneinander vollständig abdeckbar sind und in einer zweiten Verschiebestellung (Durchlaßstellung für die dem Verteilerrohr zugeführte Gülle) sich zumindest teilweise überdecken.

11. Gülleverteiler nach einem der vorhergehenden Ansprüche, **dadurch gekennzeichnet**, daß eine der beiden Trennplatten (19) durch eine sich kontinuierlich wiederholende Hin- und Herbewegung von einer gewünschten Durchlaßstellung in die Verschlußstellung und wieder zurück bewegbar ist.

12. Gülleverteiler nach einem der vorhergehenden Ansprüche, **dadurch gekennzeichnet**, daß die Hin- und Herbewegung der Trennplatte mittels eines Exzenters erfolgt.

13. Gülleverteiler nach einem der vorhergehenden Ansprüche, **dadurch gekennzeichnet**, daß die Bewegung des Exzenters mit der sich drehenden Fördereinrichtung (6) gekoppelt ist.

14. Gülleverteiler nach einem der vorhergehenden Ansprüche, **dadurch gekennzeichnet**, daß sich mit der Fördereinrichtung eine mit der Fördereinrichtung (6) verbundene Kurvenfläche (24) dreht, deren Kurvenverlauf über mindestens einen in einer der Trennplatten (19) angeordneten Anschlag (25) die Amplitude der Hin- und Herbewegung der Trennplatte bestimmt.

15. Gülleverteiler nach einem der vorhergehenden Ansprüche, **dadurch gekennzeichnet**, daß zumindest der untere Bereich (32) des Verteilerrohres (3) doppelwandig ausgebildet ist, beide Wandteile eine übereinstimmende Anzahl von Durchlaßöffnungen (5,35) aufweisen und in Längsrichtung des Verteilerrohres relativ so zueinander verschiebbar sind, daß die Durchlaßöffnungen (5,35) der Wandteile (32,32a) entweder ganz abgedeckt (Verschlußstellung) sind, oder sich zumindest teilweise überdecken (Durchlaßstellung für die Gülle).

16. Gülleverteiler nach einem der vorhergehenden Ansprüche, **dadurch gekennzeichnet**, daß an einem Ende des Verteilerrohres ein arretierbares Verstellelement (34) für das verschiebbare Wandteil oder für die verschiebbare Trennplatte (18) des Verteilerrohres angeordnet ist.

17. Gülleverteiler nach einem der vorhergehenden Ansprüche, **dadurch gekennzeichnet**, daß das arretierbare Verstellelement als Gewindespindel (34) ausgebildet ist.

18. Gülleverteiler nach einem der vorhergehenden Ansprüche, **dadurch gekennzeichnet**, daß das Verstellelement durch ein Kolben/Zylinderaggregat gebildet ist, durch das eine Hin- und Herbewegung des verschiebbaren Wandteiles oder der Trennplatte ermöglicht wird.

19. Gülleverteiler nach einem der vorhergehenden Ansprüche, **dadurch gekennzeichnet**, daß das Verstellelement als Exzenter ausgebildet ist.

20. Gülleverteiler nach einem der vorhergehenden Ansprüche, **dadurch gekennzeichnet**, daß im Verteilerrohr eine Vorrichtung (27) zur Zerkleinerung der in dem dem Verteilerrohr (3) zufließenden Güllestrom vorhandenen Güllefestbestandteile vorgesehen sind.

21. Gülleverteiler nach einem der vorhergehenden Ansprüche, **dadurch gekennzeichnet**, daß die Zerkleinerungsvorrichtung (27) zwischen dem Ende der Zuführungsleitung (4) für die Gülle und dem Beginn des Verteilerrohres (3) angeordnet ist.

22. Gülleverteiler nach einem der vorhergehenden Ansprüche, **dadurch gekennzeichnet**, daß die Vorrichtung zur Zerkleinerung der Güllefestbestandteile als Rotor (27) ausgebildet ist, mit einer Vielzahl auf seiner Welle angeordneter angeschliffener Schneidvorrichtungen (28), wie Flacheisen, Schneiden oder Messer und daß der Rotor mit der Antriebswelle (29) der Förderschnecke (6) drebbar verbunden ist.

23. Gülleverteiler nach einem der vorhergehenden Ansprüche, **dadurch gekennzeichnet**, daß die Schneidvorrichtungen (28) in den oberen Raum des Verteilerrohres (3) hineinragen.

24. Gülleverteiler nach einem der vorhergehenden Ansprüche, **dadurch gekennzeichnet**, daß die Auslauföffnungen (5) der Verteilerrohre (3) mit Schläuchen (11) verbunden sind, deren Länge so gewählt ist, daß ihre Enden beim Ausbringen der Gülle mindestens bis zur Ackerfläche reichen.

25. Gülleverteiler nach einem der vorhergehenden Ansprüche, **dadurch gekennzeichnet**, daß im unteren Schlauchbereich (11) ein Abstandshalter (12) vorgesehen ist, der die Abstände der Schlauchenden voneinander entsprechend der erforderlichen Arbeitsbreite des Gülleverteilers gegenüber den Abständen der Auslauföffnungen (5) längs der Verteilerrohre (3) vergrößert.

26. Gülleverteiler nach einem der vorhergehenden Ansprüche, **dadurch gekennzeichnet**, daß in dem Bereich zwischen den Auslauföffnungen (5) und den mit den Ausflußöffnungen verbundenen Enden der Schleppschläuche (11) Luftzutrittsöffnungen (51) vorgesehen sind.

27. Gülleverteiler nach einem der vorhergehenden Ansprüche, **dadurch gekennzeichnet**, daß die Luftzutrittsöffnung (51) durch ein an den Auslaßstutzen (13) der Ausflußöffnungen (5) angebrachtes Luftloch (5) ausgebildet ist, das die Wandung des Auslaßstutzens (13) durchdringt.

28. Gülleverteiler nach einem der vorhergehenden Ansprüche, **dadurch gekennzeichnet**, daß das Luftloch (51) mit einem in den Außenraum des Verteilerrohres (3) ragenden Lufteinlaßrohr (52) verbunden ist, dessen freies Ende für den Luftzutritt offen ist.

29. Gülleverteiler nach einem der vorhergehenden Ansprüche, **dadurch gekennzeichnet**, daß das Lufteinlaßrohr (52) nach oben zum Verteilerrohr (3) hin gerichtet ist.

30. Gülleverteiler nach einem der vorhergehenden Ansprüche, **dadurch gekennzeichnet**, daß die Luftzutrittsöffnung (51) durch ein Ventil verschlossen (52a) ist, das als Rückschlagventil ausgebildet ist.

31. Gülleverteiler nach einem der vorhergehenden Ansprüche, **dadurch gekennzeichnet**, daß das Ventil (52a) an dem mit der Luftzutrittsöffnung (51) des Ausflußstutzens (13) verbundenen Ende des Lufteinlaßrohres (52) angeordnet ist.

32. Gülleverteiler nach einem der vorhergehenden Ansprüche, **dadurch gekennzeichnet**, daß längs der Verteilerrohre (3,3a,3b,3c) ein oder mehrere Vorhangteile (56a,b,c,d,e) aus einem gummielastischen Material (Kunststoff-Folie oder Gummi) in Reihe angeordnet sind, wobei die Länge der Vorhangteile so gewählt ist, daß die freien Ränder heim Ausbringen der Gülle mindestens bis zur Ackerfläche reichen.

33. Gülleverteiler nach einem der vorhergehenden Ansprüche, **dadurch gekennzeichnet**, daß die Vorhangteile (56a,b,c,d,e) die Verteilerrohre (3,3a,b,c) allseitig umgeben.

34. Gülleverteiler nach einem der vorhergehenden Ansprüche, **dadurch gekennzeichnet**, daß sich die aneinandergrenzenden Vorhangabschnitte (56c) überlappen.

35. Gülleverteiler nach einem der vorhergehenden Ansprüche, **dadurch gekennzeichnet**, daß zwei Verteilerrohre (3a,3b) vorgesehen sind, die an der Rückwand des Güllevorratsbehälters (1) um vertikale Achsen (10) schwenkbar sind und sich in Verteilerstellung quer zur Fahrtrichtung des Güllevorratsbehälters (1) befinden und in Transportstellung längs beider Seitenflächen des Güllevorratsbehälters anliegen.

36. Gülleverteiler nach einem der vorhergehenden Ansprüche, **dadurch gekennzeichnet**, daß am Güllevorratsbehälter (1) ein Hebegerüst (2) auf- und abbewegbar angeordnet ist, in das die Verteilerrohre (3) einhängbar sind.

37. Gülleverteiler nach einem der vorhergehenden Ansprüche, **dadurch gekennzeichnet**, daß ein einziger Verteilerarm (3) vorgesehen ist, der quer zur Fahrtrichtung des Güllevorratsbehälters (1) an dessen Rückwand oder an dem an der Rückwand vorgesehenen Hebegerüst (2) angeordnet ist.
